(19) Europäisches Patentamt
European Patent Office
Office européen des brevets

(11) **EP 3 928 079 B1**

(12) **EUROPÄISCHE PATENTSCHRIFT**

(45) Veröffentlichungstag und Bekanntmachung des Hinweises auf die Patenterteilung:
**22.11.2023 Patentblatt 2023/47**

(21) Anmeldenummer: **20705973.4**

(22) Anmeldetag: **19.02.2020**

(51) Internationale Patentklassifikation (IPC):
*G01N 21/25* (2006.01)  *G01J 3/50* (2006.01)
*G01J 3/46* (2006.01)  *G01N 21/47* (2006.01)
*G01N 21/55* (2014.01)

(52) Gemeinsame Patentklassifikation (CPC):
**G01N 21/25; G01J 3/463; G01J 3/504; G01N 21/55**

(86) Internationale Anmeldenummer:
**PCT/EP2020/054381**

(87) Internationale Veröffentlichungsnummer:
**WO 2020/169678 (27.08.2020 Gazette 2020/35)**

(54) **VERFAHREN UND VORRICHTUNG ZUM IDENTIFIZIEREN VON INTERFERENZPIGMENTEN IN EINER BESCHICHTUNG**

METHOD AND DEVICE FOR IDENTIFYING INTERFERENCE PIGMENTS IN A COATING

PROCÉDÉ ET DISPOSITIF D'IDENTIFICATION DE PIGMENTS D'INTERFÉRENCE DANS UN REVÊTEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.02.2019 EP 19158943**

(43) Veröffentlichungstag der Anmeldung:
**29.12.2021 Patentblatt 2021/52**

(73) Patentinhaber: **BASF Coatings GmbH**
**48165 Münster (DE)**

(72) Erfinder:
• **MUNDUS, Markus**
**48165 Muenster (DE)**
• **BISCHOFF, Guido**
**48165 Muenster (DE)**
• **KANTIMM, Thomas**
**48165 Muenster (DE)**
• **SCHMITZ, Martin**
**48165 Muenster (DE)**

(74) Vertreter: **BASF IP Association**
**BASF SE**
**GBI-C006**
**67056 Ludwigshafen (DE)**

(56) Entgegenhaltungen:
**WO-A1-2018/217867    US-A1- 2017 200 288**

**Beschreibung**

Die vorgestellte Erfindung betrifft ein Verfahren und eine Vorrichtung zum Identifizieren von Interferenzpigmenten in einer auf einer Oberfläche aufgebrachten Beschichtung.

Beschichtungen, insbesondere Farbbeschichtungen sind überall anzutreffen: im Automobilbau, in der Architektur, in der Unterhaltungselektronik und bei Alltagsgegenständen. Derartige Beschichtungen können die jeweils beschichteten Oberflächen schützen und das Design und dadurch ggf. die Attraktivität von Produkten durch eine Vielfalt an Farb-, Glanz-, und Glittereffekten steigern. Mit Effektpigmenten sind individuelle, unverwechselbare Farbeffekte generierbar. Zudem wird dadurch oft eine Beständigkeit gegenüber Witterungseinflüssen und UV-Strahlen erzielt.

Eine genaue Farbabstimmung von Farben bzw. Lacken solcher Beschichtungen erfordert eine exakte Identifikation von individuellen Pigmenttypen und deren jeweilig zu verwendenden Mengen. Weiß-, Schwarz- oder Buntpigmente, die in Lacken und darauf basierend hergestellten Beschichtungen feinverteilt vorliegen, interagieren mit einfallendem Licht nahezu isotrop. Das bedeutet, dass ihr jeweiliges Reflexionsspektrum nur eine geringe Winkelabhängigkeit zeigt und der von den Farbpigmenten erzeugte Farbeindruck nahezu unabhängig ist von dem Beleuchtungswinkel, unter welchem die mit der Beschichtung versehene Oberfläche beleuchtet wird, oder dem Beobachtungswinkel, unter welchem die die mit der Beschichtung versehene Oberfläche betrachtet bzw. vermessen wird.

Im Gegensatz dazu zeigt ein Reflexionsspektrum eines Interferenzpigments, das in einem Lack bzw. in einer darauf basierenden Beschichtung feinverteilt vorliegt, in der Regel durchaus eine Abhängigkeit von dem Beleuchtungswinkel, unter welchem das Licht auf die Oberfläche fällt, auf welcher eine das Interferenzpigment umfassende Beschichtung aufgetragen ist. Dabei beeinflusst der in der Regel Schwarz-, Weiß- oder Buntpigmente enthaltende Lack das Reflexionsspektrum eines Interferenzpigments. Darüber hinaus können solche Interferenzpigmente nur innerhalb eines kleinen Streuwinkelbereichs um den spekularen Winkel herum detektiert bzw. beobachtet werden. Diese solchen Interferenzpigmenten innewohnenden Eigenschaften verhindern eine explizite Identifikation der Interferenzpigmente durch einzelne, spektral aufgelöste Aufnahmen bzw. Bilder einer jeweiligen derartige Interferenzpigmente umfassenden Beschichtung.

US2017/0200288 A1 beschreibt ein Verfahren, bei dem mithilfe eines Prozessors Bilder von einer Zielbeschichtung generiert werden, die so generierten Bilder einer Bildanalyse unterzogen werden, dabei Glitzerpunkte identifiziert werden und mithilfe einer Farbtonanalyse deren Farbe bestimmt wird und eine Glitzerfarbverteilung statistisch berechnet wird. Eine lokale Identifikation einzelner Interferenzpigmente ist hierbei jedoch nicht möglich.

WO 2018/217867 A1 beschreibt, wie die Farbstärke einer farbigen Charge, die Effektpigmente enthält, unter Verwendung eines oder mehrerer ungleichgewichteter Faktoren gemessen und korrigiert werden kann, um bei mehreren Kombinationen von Beleuchtungswinkeln und Messwinkeln und bei einer oder mehreren Wellenlängen die Farbe und Intensität des von einem aus der Charge hergestellten Lackfilm reflektierten oder absorbierten Lichts im Vergleich zu einer Referenzfarbstärke zu bestimmen.

Es war demnach eine Aufgabe der vorliegenden Erfindung, eine Möglichkeit bereitzustellen, auch einzelne Interferenzpigmente innerhalb einer Beschichtung möglichst exakt und einfach bestimmen zu können.

Gelöst wird diese Aufgabe durch Verfahren und eine Vorrichtung mit den Merkmalen der unabhängigen Ansprüche. Ausgestaltungen der Erfindung sind den abhängigen Ansprüchen und der Beschreibung zu entnehmen.

Es wird ein Verfahren zum Identifizieren eines Interferenzpigmentes in einer Beschichtung bereitgestellt, das mindestens die folgenden Schritte aufweist:

- Beleuchten der auf einer Oberfläche (eines Probenplättchens) aufgebrachten Beschichtung mit Licht unter einem ersten Beleuchtungswinkel relativ zu der Normalen der Oberfläche,
- Aufnehmen eines ersten Bildes von der auf der Oberfläche aufgebrachten Beschichtung unter einem ersten aspekularen Messwinkel bzw. Beobachtungswinkel, gemessen relativ zu dem dem ersten Beleuchtungswinkel zugeordneten Glanzwinkel bzw. spekularen Winkel in Bezug auf die Normale der Oberfläche,
- Beleuchten der auf der Oberfläche aufgebrachten Beschichtung mit Licht unter mindestens einem zweiten von dem ersten unterschiedlichen Beleuchtungswinkel relativ zu der Normalen der Oberfläche,
- Aufnehmen mindestens eines zweiten Bildes von der auf der Oberfläche aufgebrachten Beschichtung unter dem ersten aspekularen Messwinkel, gemessen relativ zu dem dem mindestens einen zweiten Beleuchtungswinkel zugeordneten Glanzwinkel bzw. spekularen Winkel in Bezug auf die Normale der Oberfläche, oder einem korrigierten ersten aspekularen Messwinkel, gemessen relativ zu dem dem mindestens einen zweiten Beleuchtungswinkel zugeordneten Glanzwinkel, wobei der korrigierte erste aspekulare Messwinkel aus dem ersten aspekularen Messwinkel durch Korrektur entsprechend einer unter dem mindestens einen zweiten Beleuchtungswinkel gegenüber dem ersten Beleuchtungswinkel veränderten optischen Brechung des Lichts hervorgeht,
- räumliches Analysieren und Auswerten des ersten Bildes und des mindestens einen zweiten Bildes,
- spektrales Analysieren und Auswerten des ersten Bildes und des mindestens einen zweiten Bildes,
- Identifizieren des Interferenzpigments auf Basis des räumlichen und spektralen Analysierens und Auswertens des ersten Bildes und des mindestens einen zweiten Bildes, des ersten und des mindestens einen zweiten Beleuchtungswinkels und des ersten aspekularen Messwinkels oder des korrigierten ersten aspekularen Messwinkels.

Unter dem Begriff "Messanordnung" wird im Rahmen der vorliegenden Offenbarung die Gesamtheit derjenigen Komponenten eines Farbmessgeräts verstanden, welche zur Beleuchtung eines Messflecks auf der Oberfläche eines Messobjekts mit Licht und zur Erfassung des von diesem Messfleck zurückgestrahlten Lichts bzw. zur Erfassung des ersten und des mindestens einen zweiten Bildes dienen. Unter "Normalen der Oberfläche" ist eine gerätefeste (gedachte) Linie zu verstehen, die beim praktischen Einsatz des Farbmessgeräts (idealerweise) senkrecht auf der Oberfläche des Messobjekts steht und den Mittelpunkt des Messflecks definiert. Unter Beleuchtungswinkel bzw. Beleuchtungsrichtung ist der Winkel bzw. die Richtung zu verstehen, aus dem bzw. der der Messfleck mit Licht beleuchtet wird. Analog ist unter Beobachtungs- bzw. Messrichtung bzw. Beobachtungs- bzw. Messwinkel die Richtung bzw. der Winkel zu verstehen, aus welcher bzw. unter welchem das von dem Messfleck zurückgestrahlte Licht aufgenommen und gemessen wird. Unter "spekularer Richtung" bzw. "Glanzwinkel" ist die an der Oberfläche des (ebenen) Messobjekts gespiegelte nominelle Beobachtungsrichtung bzw. Beobachtungs- bzw. Messwinkel zu verstehen. Bei mehreren möglichen Beleuchtungsrichtungen eines Messgeräts ergeben sich folglich mehrere jeweilige spekulare Richtungen. Relativ zu einer jeweiligen spekularen Richtung, die sich in Abhängigkeit der jeweiligen Beleuchtungsrichtung ergibt, wird jeweils der aspekulare Beobachtungs- bzw. Messwinkel gemessen, unter dem das erste Bild und das mindestens eine zweite Bild jeweils aufgenommen werden. Unter "Messebene" ist eine durch die Normale (Gerätenormale) und alle Beleuchtungsrichtungen und die Beobachtungsrichtungen sowie die spekulare Richtung verlaufende Ebene zu verstehen. Alle Winkelangaben beziehen sich auf innerhalb der Messebene liegende Richtungen. Ein Messobjekt ist ein Probenplättchen mit einer auf einer Oberfläche aufgebrachten Beschichtung, wobei die Beschichtung in einem Trägermaterial (fein) verteilte Pigmente umfasst.

Gemäß dem erfindungsgemäßen Verfahrens wird demnach der Beleuchtungswinkel, unter welchem die Oberfläche bzw. die auf der Oberfläche aufgebrachte Beschichtung beleuchtet wird, d.h. der Einfallswinkel (angle of incidence - AOI) variiert während die Beschichtung bei gleichbleibendem bzw. entsprechend der veränderten Lichtbrechung korrigiertem aspekularen Beobachtungswinkel anhand der aufgenommenen Bilder, d. h. des ersten Bildes und des mindestens einen zweiten Bildes sowohl spektral als auch räumlich ausgewertet wird.

Bei Variieren des Beleuchtungswinkels wird die spektrale Variation der Reflexion (spektral aufgelöste Analyse) der individuellen Interferenzpigmente (räumlich aufgelöste Analyse) bei gleichbleibendem bzw. entsprechend der veränderten Lichtbrechung korrigiertem aspekularen Beobachtungswinkel, damit verbunden aber geändertem Beobachtungs- bzw. Messwinkel, relativ zu der Oberflächennormalen, jeweils ausgewertet. Dadurch kann ein jeweiliger Interferenzpigmenttyp eindeutig identifiziert werden. Die mit Änderung des Beleuchtungswinkels einhergehende Variation der spektralen Reflexion oder Farbe aufgrund der sich ändernden optischen Weglänge innerhalb der die Interferenzpigmente umfassenden Beschichtung stellt eine neue Messgröße zur Identifikation der jeweiligen Interferenzpigmente dar, da ein jeweiliger Interferenzpigmenttyp eine charakteristische Variation der spektralen Reflexion in Abhängigkeit von dem Beleuchtungswinkel zeigt. In einer Datenbank ist die jeweilige den jeweiligen Interferenzpigmenttypen zugeordnete charakteristische Variation der spektralen Reflexion in Abhängigkeit von dem Beleuchtungswinkel hinterlegt. Darüber hinaus können in der Datenbank die jeweiligen für die jeweiligen Interferenzpigmenttypen charakteristischen aspekularen Beobachtungswinkel, ggf. zusammen mit dem jeweils noch eine Reflexion zeigenden Toleranz- bzw. Streuwinkelbereich um den jeweiligen aspekularen Beobachtungswinkel herum, den jeweiligen Interferenzpigmenttypen zugeordnet abrufbar hinterlegt sein.

In Abgrenzung zu US2017/0200288 A1 wird bei dem erfindungsgemäßen Verfahren keine statistische Verteilung der Farbe der im Lack verteilten Pigmentflakes (Pigmentplättchen) bestimmt, um eine Formulierung des Lacks zu bestimmen, sondern die spektralen Änderungen individueller/einzelner Effektpigmente werden bewertet, um einzelne Pigmenttypen zu identifizieren.

Ein Interferenzpigment ist ein Effektpigment, dessen Wirkung vorwiegend oder ganz auf Interferenz von Licht an dünnen, hochbrechenden Schichten beruht. Einfallendes Licht wird dabei zum Teil an der Grenzfläche zwischen Interferenzpigment und Trägermaterial als weiterem Bestandteil der Beschichtung reflektiert. Der andere Teil wird ins Innere der Beschichtung gebrochen. An der Grenzfläche zwischen Beschichtung und Substrat- bzw. Probenplättchenoberfläche bzw. weiterer dünner Schicht bei einem Mehrschichtsystem wird schließlich das restliche bzw. weiteres Licht reflektiert und dann vor Austritt aus der Beschichtung an deren Oberfläche nochmals gebrochen. Lichtstrahlen, die die Oberfläche der Beschichtung an derselben Stelle verlassen, müssen unterschiedliche Weglängen zurücklegen, wodurch bestimmte Wellenlängen durch Überlagerung ausgelöscht und andere verstärkt werden. Dadurch entsteht im sichtbaren Spektralbereich Farbe und zwar, da der Unterschied der Weglängen abhängig vom Einfallswinkel des einstrahlenden Lichts, d. h. vom Beleuchtungswinkel ist, ein winkelabhängiger Farbeindruck (Farbflop). Im nicht-sichtbaren Spektralbereich macht sich der Effekt generell durch detektierbare winkelabhängige Wellenlängen des reflektierten Lichts bemerkbar.

Generell ist im Rahmen der vorliegenden Offenbarung unter "Licht" sowohl elektromagnetische Strahlung im sichtbaren Spektralbereich als auch im nicht-sichtbaren Spektralbereich, bspw im Infrarotbereich oder im UV-Bereich, zu verstehen. Das bedeutet, dass die erfindungsgemäßen Verfahren und das erfindungsgemäße System sowohl im sichtbaren als auch im nicht-sichtbaren Spektralbereich anwendbar bzw. einsetzbar sind. Interferenzpigmente, die ihre Wirkung gerade oder unter anderem im Infrarotbereich zeigen, können für vielerlei Sensorik, bspw. bei Lidar zur Abstands- und/oder Geschwindigkeitsmessung von bspw. mit der Beschichtung beschichteten Fahrzeugen, relevant sein.

Interferenzpigmente liegen oft als Plättchen (Flakes) vor, die in der Beschichtung bzw. dem Lack in einer jeweiligen Richtung, die in der Regel nicht parallel zu der Oberfläche der Beschichtung verläuft, orientiert sind. Um einfallendes Licht bei einem gegebenen Beleuchtungswinkel relativ zur Normalen der Oberfläche des Messobjekts in eine bestimmte Beobachtungsrichtung zu reflektieren, müssen die Plättchen in der Beschichtung bzw. dem Lack in einer bestimmten Richtung orientiert sein, nämlich genau so, dass das einfallende Licht bei Auftreffen auf das jeweilige Plättchen genau in die bestimmte Beobachtungsrichtung spekular reflektiert wird. Es gibt Interferenzpigmenttypen, die sich gut, d. h. parallel oder nahezu parallel zur Oberfläche des Messobjekts ausrichten und andere, die sich demgegenüber schlecht, d. h. unter einem deutlich messbaren Winkel größer 0° zur Oberfläche des Messobjekts ausrichten.

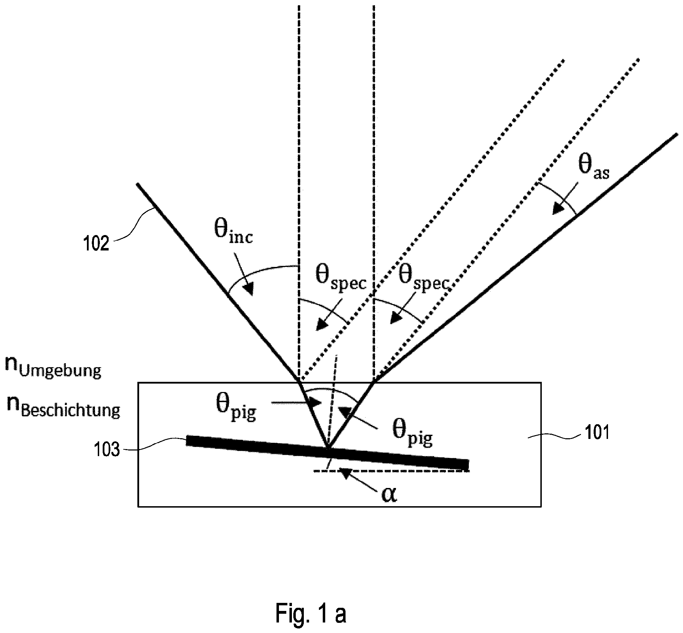

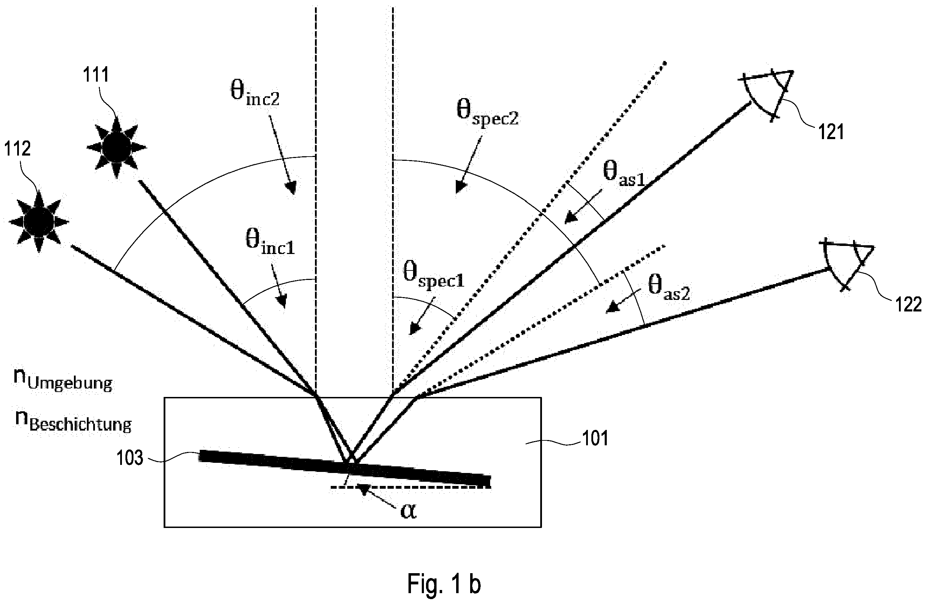

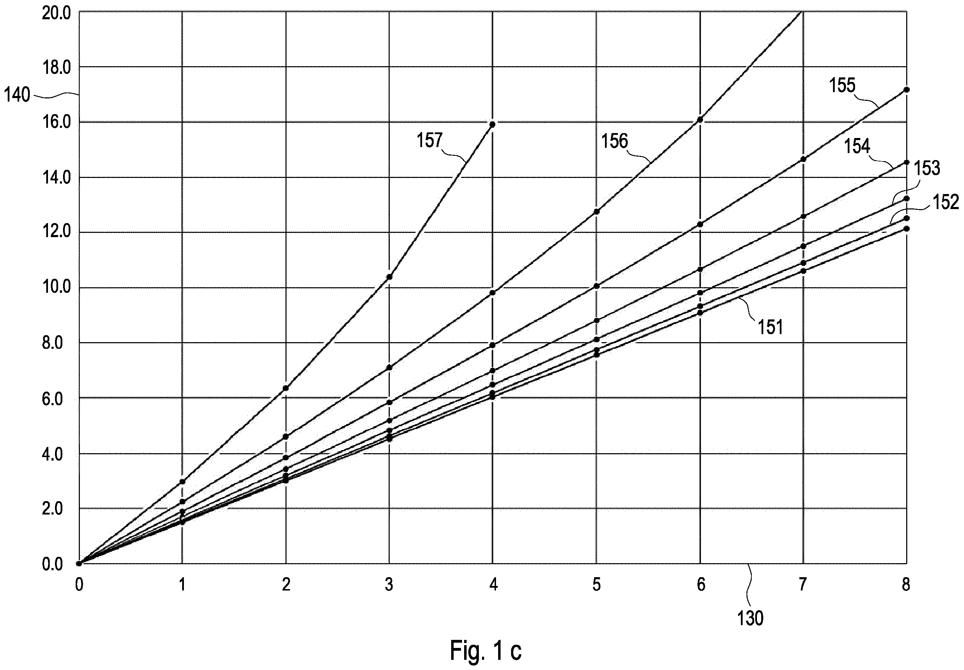

Erfindungsgemäß ist vorgesehen, eine Oberfläche des Probenplättchens, die mit einer Beschichtung bzw. einem Lack mit einer unbekannten Formulierung beschichtet ist, mit Licht, insbesondere weißem Licht unter einem bestimmten Beleuchtungswinkel relativ zur Oberflächennormalen, bspw. unter einem Winkel von 45° relativ zur Oberflächennormalen zu beleuchten ($\theta_{inc}$, vgl. Figur 1). Über der Beschichtung mit unbekannter Formulierung kann noch ein bekannter konventioneller Klarlack aufgebracht sein. Sodann wird mit Hilfe eines Sensors bzw. einer Kamera eine spektrale Strahlung, die von der Oberfläche des Messobjekts reflektiert wird, unter einem bestimmten aspekularen Messwinkel ($\theta_{as}$, vgl. Figur 1), wie bspw. as15°, d.h. 15° relativ zu dem Glanzwinkel ($\theta_{spec}$, vgl. Figur 1), wobei "as" für "aspekular" steht, räumlich aufgelöst erfasst, insbesondere in Form eines Bildes.

Umfasst die Beschichtung mit unbekannter Formulierung Interferenzpigmente, so sind diejenigen Interferenzpigmente in dem erfassten Bild sichtbar, die relativ zur Probenoberfläche so ausgerichtet sind, d.h. deren Interferenzpigmentplättchen, dass sie in Richtung des aspekularen Messwinkels spekular reflektieren (vgl. Figur 1). Mit Kenntnis der Brechungsindizes der Umgebung (typischerweise Luft, $n_{Umgebung}$=1) und der das Interferenzpigment umgebenden Beschichtung (typischerweise $n_{Beschichtung}$=1.5, vgl. Figur 1) ist es möglich, paarweisen Kombinationen von Beleuchtungsrichtung (Beleuchtungswinkel) und Beobachtungsrichtung (Messwinkel) eindeutig eine Orientierung $\alpha$ (vgl. Figur 1) zuzuordnen, in der ein Interferenzpigmentflake (Plättchen) in der Beschichtung bzw. dem Lack orientiert sein muss, um die Beleuchtung bzw. das einfallende Licht spekular in Beobachtungsrichtung zu reflektieren. Für den aspekularen Winkel $\theta_{as}$, in den das mit $\alpha$ relativ zur Oberfläche orientierte Interferenzpigment spekular reflektiert, gilt gemäß Figur 1 in Abhängigkeit des Einfallswinkels des Lichts auf die Probenoberfläche $\theta_{inc}$ (gemessen zur Normalen):

$$\theta_{as} = \arcsin[n_{Beschichtung}/n_{Umgebung} * \sin(\arcsin(n_{Umgebung}/n_{Beschichtung} * \sin(\theta_{inc})) + \alpha)] - \theta_{inc}$$

$$(1)$$

Für einen veränderten Einfallswinkel des Lichts $\theta_{inc2}$ ändert sich nach obiger Gleichung auch die Beobachtungsrichtung für die spekulare Reflexion des mit $\alpha$ relativ zur Oberfläche orientierten Interferenzpigments (vgl. Figur 1b). Es gilt jedoch in erster Näherung (kleine Winkel $\theta$ und $\alpha$), dass $\theta_{as1} \approx \theta_{as2}$ und damit, dass das Interferenzpigment weiterhin in den gleichen aspekularen Beobachtungswinkel spekular reflektiert (vgl. Figur 1c). Darüber hinaus haben die Optiken der verwendeten Kameras einen gewissen Akzeptanzwinkel (numerische Apertur), sodass in der Praxis geringe Abweichungen in $\theta_{as}$ toleriert werden können.

Demnach kann ein einzelnes Interferenzpigment für verschiedene Messgeometrien, bspw. 45as15 und 55as15, unter Beibehaltung des aspekularen Beobachtungswinkels vermessen werden. Falls erforderlich, kann obige Gleichung für eine Korrektur des aspekularen Winkels, wobei dann der voranstehend erwähnte korrigierte erste aspekulare Winkel resultiert, verwendet werden. Da der aspekulare Beobachtungswinkel bei Aufnahme des ersten und des mindestens einen zweiten Bildes (nahezu) beibehalten wird, zeigen bei den mindestens zwei Messungen, d. h. bei Aufnahme des ersten Bildes und des mindestens einen zweiten Bildes die gleichen Interferenzpigmente spekulare Reflexion in die Beobachtungsrichtung und sind demnach sowohl in dem ersten wie auch in dem mindestens einen zweiten Bild sichtbar. Dabei wird die spektrale Reflexion der gleichen Interferenzpigmente bei unterschiedlichem Beleuchtungs- bzw. Einfallswinkel ausgewertet. Es können auch mehr als zwei verschiedene Einfallswinkel nacheinander verwendet und die spektrale Reflexion einzeln und in Gesamtschau ausgewertet werden. Wie voranstehend erwähnt, zeigt ein jeweiliger Interferenzpigmenttyp eine für ihn charakteristische Variation der spekularen Reflexion in Abhängigkeit des Beleuchtungswinkels.

In einem weiteren Schritt wird ein von dem ersten Einfalls- bzw. Beleuchtungswinkel unterschiedlicher Beleuchtungswinkel gewählt, die Aufnahme eines weiteren Bildes aber bei dem (nahezu) gleichen aspekularen Winkel relativ zu dem sich aus dem Beleuchtungswinkel ergebenden Glanzwinkel gemacht. Das bedeutet, dass der reale Beobachtungswinkel relativ zur Oberflächennormalen des Messobjekts entsprechend bestimmt und geändert werden muss.

In weiterer Ausgestaltung des erfindungsgemäßen Verfahrens umfasst der Schritt des spektralen Analysierens und Auswertens ein Ableiten eines jeweiligen Remissionsspektrums für das erste und das mindestens eine zweite Bild.

In noch weiterer Ausgestaltung des erfindungsgemäßen Verfahrens wird das Ableiten des jeweiligen Remissionsspektrums für das erste und das mindestens eine zweite Bild mittels eines Simulationsalgorithmus durchgeführt.

In noch anderer Ausgestaltung des erfindungsgemäßen Verfahrens wird zum Aufnehmen des ersten und des mindestens einen zweiten Bildes mindestens eine Kamera, insbesondere eine Mehrwinkelfarbkamera oder eine Hyperspektralkamera, verwendet.

Wie voranstehend bereits erläutert, ist es denkbar, eine Mehrzahl von zweiten Bildern bei einer entsprechenden Mehrzahl von zweiten Beleuchtungswinkeln von der auf der Oberfläche aufgebrachten Beschichtung unter dem ersten aspekularen Messwinkel, gemessen relativ zu dem dem jeweiligen zweiten Beleuchtungswinkel zugeordneten Glanzwinkel oder dem gemäß Gleichung (1) korrigierten ersten aspekularen Messwinkel aufzunehmen.

Weiter kann das Verfahren zum Identifizieren mehrerer verschiedener Interferenzpigmente entsprechend mehrmals durchgeführt wird, wobei der aspekulare Messwinkel ebenfalls mehrmals variiert werden kann.

Die vorliegende Offenbarung betrifft ferner ein computerimplementiertes Verfahren zum Identifizieren eines Interferenzpigmentes bzw. eines Interferenzpigmenttyps in einer Beschichtung, das mindestens die folgenden Schritte aufweist:

- Empfangen eines ersten Bildes, wobei das erste Bild von der auf einer Oberfläche (eines Probenplättchens) aufgebrachten Beschichtung unter Beleuchtung der auf der Oberfläche aufgebrachten Beschichtung mit Licht unter einem ersten Beleuchtungswinkel relativ zu der Normalen der Oberfläche mit einer Bilderfassungseinheit unter einem ersten aspekularen Messwinkel, gemessen relativ zu dem dem ersten Beleuchtungswinkel zugeordneten Glanzwinkel in Bezug zur Normalen der Oberfläche aufgenommen wurde,
- Empfangen mindestens eines zweiten Bildes, wobei das mindestens eine zweite Bild von der auf der Oberfläche aufgebrachten Beschichtung unter Beleuchtung der auf der Oberfläche aufgebrachten Beschichtung mit Licht unter einem zweiten zu dem ersten unterschiedlichen Beleuchtungswinkel relativ zu der Normalen der Oberfläche mit einer Bilderfassungseinheit unter dem ersten aspekularen Messwinkel, gemessen relativ zu dem dem mindestens einen zweiten Beleuchtungswinkel zugeordneten Glanzwinkel in Bezug zur Normalen der Oberfläche oder unter einem korrigierten ersten aspekularen Messwinkel, gemessen relativ zu dem dem mindestens einen zweiten Beleuchtungswinkel zugeordneten Glanzwinkel, aufgenommen wurde, wobei der korrigierte erste aspekulare Messwinkel aus dem ersten aspekularen Messwinkel durch Korrektur (gemäß Gleichung (1)) entsprechend einer unter dem mindestens einen zweiten Beleuchtungswinkel gegenüber dem ersten Beleuchtungswinkel veränderten optischen Brechung des Lichts hervorgeht,

- Durchführen einer Bildanalyse für das erste und das mindestens eine zweite Bild, unter Verwendung mindestens eines Prozessors,
- Erkennen des Interferenzpigments innerhalb des ersten und des mindestens einen zweiten Bildes durch eine räumlich aufgelöste Analyse der Bilder,
- Auswerten, Berechnen und/oder Simulieren eines jeweiligen Remissionsspektrums für das erste und das mindestens eine zweite Bild,
- Identifizieren des Interferenzpigments bzw. des Interferenzpigmenttyps auf Basis des räumlichen und spektralen Analysierens und Auswertens des ersten Bildes und des mindestens einen zweiten Bildes, des ersten und des mindestens einen zweiten Beleuchtungswinkels und des ersten aspekularen Messwinkels oder des korrigierten ersten aspekularen Messwinkels.

Darüber hinaus ist Gegenstand der vorliegenden Offenbarung auch eine Vorrichtung, mindestens umfassend:

- eine Datenbank,
- einen Prozessor, der in kommunikativer Verbindung mit der Datenbank steht und dazu konfiguriert ist, mit der Datenbank zu kommunizieren bzw. Daten auszutauschen, wobei der Prozessor programmiert ist, nachfolgende Schritte auszuführen:
- Empfangen eines ersten Bildes, wobei das erste Bild von einer auf einer Oberfläche (eines Probenplättchens) aufgebrachten Beschichtung unter Beleuchtung der auf der Oberfläche aufgebrachten Beschichtung mit Licht unter einem ersten Beleuchtungswinkel relativ zu der Normalen der Oberfläche mit einer Bilderfassungseinheit unter einem ersten aspekularen Messwinkel, gemessen relativ zu dem dem ersten Beleuchtungswinkel zugeordneten Glanzwinkel in Bezug zur Normalen der Oberfläche aufgenommen wurde,

- Empfangen mindestens eines zweiten Bildes, wobei das mindestens eine zweite Bild von der auf der Oberfläche aufgebrachten Beschichtung unter Beleuchtung der auf der Oberfläche aufgebrachten Beschichtung mit Licht unter einem zweiten zu dem ersten unterschiedlichen Beleuchtungswinkel relativ zu der Normalen der Oberfläche mit einer Bilderfassungseinheit unter dem ersten aspekularen Messwinkel, gemessen relativ zu dem dem mindestens einen zweiten Beleuchtungswinkel zugeordneten Glanzwinkel in Bezug zur Normalen der Oberfläche oder unter einem auf Basis von Gleichung (1) korrigierten ersten aspekularen Messwinkel, gemessen relativ zu dem dem mindestens einen zweiten Beleuchtungswinkel zugeordneten Glanzwinkel, aufgenommen wurde, wobei der korrigierte erste aspekulare Messwinkel aus dem ersten aspekularen Messwinkel durch Korrektur entsprechend einer unter dem mindestens einen zweiten Beleuchtungswinkel gegenüber dem ersten Beleuchtungswinkel veränderten optischen Brechung des Lichts hervorgeht,

- Durchführen einer Bildanalyse für das erste und das mindestens eine zweite Bild,
- Erkennen eines Interferenzpigments innerhalb des ersten und des mindestens einen zweiten Bildes durch eine räumlich aufgelöste Analyse der Bilder,
- Auswerten, Berechnen und/oder Simulieren eines jeweiligen Remissionsspektrums für das erste und das mindestens eine zweite Bild,
- Identifizieren des Interferenzpigments bzw. des Interferenzpigmenttyps auf Basis des räumlichen und spektralen Analysierens und Auswertens des ersten Bildes und des mindestens einen zweiten Bildes, des ersten und des mindestens einen zweiten Beleuchtungswinkels und des ersten aspekularen Messwinkels oder des korrigierten ersten aspekularen Messwinkels und unter Abgleich mit jeweiligen in der Datenbank hinterlegten jeweiligen Interferenzpigmenten (bzw. Interferenzpigmenttypen) zugeordneten charakteristischen Variationen der spekularen Reflexion bei unterschiedlichen Beleuchtungswinkeln, d. h. in Abhängigkeit des Beleuchtungswinkels.

Die Bilderfassungseinheit kann eine Kamera, insbesondere eine Farbkamera oder Hyperspektralkamera, vorzugsweise eine Mehrwinkel-Farbkamera sein. Im Falle einer Hyperspektralkamera wird das jeweilige Remissionsspektrum direkt ausgegeben und ist demnach lediglich noch auszuwerten. Die Bilderfassungseinheit kann auch ein System sein, das (auch) im nicht-sichtbaren Spektralbereich operiert, wie bspw. eine Multispektralkamera (von UV bis NIR).

Die erfindungsgemäße Vorrichtung umfasst in Ausgestaltung zusätzlich die Bilderfassungseinheit, die in kommunikativer Verbindung mit dem Prozessor steht und dazu konfiguriert ist, das erste und das mindestens eine zweite Bild aufzunehmen.

Die erfindungsgemäße Vorrichtung ist insbesondere dazu konfiguriert, ein Verfahren mit den voranstehend erläuterten Merkmalen auszuführen.

Die vorliegende Offenbarung bezieht sich weiterhin auf ein nichtflüchtiges, computerlesbares Medium, das ein Computerprogramm mit Programmcodemitteln umfasst, die dazu ausgelegt sind, wenn das Computerprogramm auf einer Recheneinheit, insbesondere auf dem Prozessor der voranstehend beschriebenen Vorrichtung abläuft, folgende Schritte auszuführen:

- Empfangen eines ersten Bildes, wobei das erste Bild von einer auf einer Oberfläche aufgebrachten Beschichtung unter Beleuchtung der auf der Oberfläche aufgebrachten Beschichtung mit Licht unter einem ersten Beleuchtungswinkel relativ zu der Normalen der Oberfläche mit einer Bilderfassungseinheit unter einem ersten aspekularen Messwinkel, gemessen relativ zu dem dem ersten Beleuchtungswinkel zugeordneten Glanzwinkel in Bezug zur Normalen der Oberfläche aufgenommen wurde,
- Empfangen mindestens eines zweiten Bildes, wobei das mindestens eine zweite Bild von der auf der Oberfläche aufgebrachten Beschichtung unter Beleuchtung der auf der Oberfläche aufgebrachten Beschichtung mit Licht unter einem zweiten zu dem ersten unterschiedlichen Beleuchtungswinkel relativ zu der Normalen der Oberfläche mit einer Bilderfassungseinheit unter dem ersten aspekularen Messwinkel, gemessen relativ zu dem dem mindestens einen zweiten Beleuchtungswinkel zugeordneten Glanzwinkel in Bezug zur Normalen der Oberfläche, oder unter einem korrigierten ersten aspekularen Messwinkel, gemessen relativ zu dem dem mindestens einen zweiten Beleuchtungswinkel zugeordneten Glanzwinkel, aufgenommen wurde, wobei der korrigierte erste aspekulare Messwinkel aus dem ersten aspekularen Messwinkel durch Korrektur (gemäß Gleichung (1)) entsprechend einer unter dem mindestens einen zweiten Beleuchtungswinkel gegenüber dem ersten Beleuchtungswinkel veränderten optischen Brechung des Lichts hervorgeht,

- Durchführen einer Bildanalyse für das erste und das mindestens eine zweite Bild,
- Erkennen eines Interferenzpigments innerhalb des ersten und des mindestens einen zweiten Bildes durch eine räumlich aufgelöste Analyse der Bilder,
- Auswerten, Berechnen und/oder Simulieren eines jeweiligen Remissionsspektrums für das erste und das mindestens eine zweite Bild,
- Identifizieren des Interferenzpigments bzw. des Interferenzpigmenttyps auf Basis des räumlichen und spektralen Analysierens und Auswertens des ersten Bildes und des mindestens einen zweiten Bildes, des ersten und des mindestens einen zweiten Beleuchtungswinkels und des ersten aspekularen Messwinkels oder des korrigierten ersten aspekularen Messwinkels und unter Abgleich mit jeweiligen in einer Datenbank hinterlegten jeweiligen Interferenzpigmenten (bzw. Interferenzpigmenttypen) zugeordneten charakteristischen Variationen der spekularen Reflexion.

Das nichtflüchtige, computerlesbare Medium ist insbesondere dazu ausgelegt, wenn das Computerprogramm auf einer Recheneinheit, insbesondere auf dem Prozessor der voranstehend beschriebenen Vorrichtung abläuft, ein voranstehend beschriebenes Verfahren auszuführen.

Die Erfindung ist anhand von Ausführungsformen in der Zeichnung schematisch dargestellt und wird unter Bezugnahme auf die Zeichnung weiter beschrieben.

Figur 1 zeigt in Figur 1a in schematischer Darstellung eine mögliche Messgeometrie zur Erfassung eines Bildes einer auf einer Oberfläche eines Probenplättchens aufgebrachten Beschichtung mit darin umfassten Pigmentplättchen, in Figur 1b mögliche Messgeometrien zur Erfassung eines ersten und mindestens eines zweiten Bildes einer auf einer Oberfläche eines Probenplättchens aufgebrachten Beschichtung mit darin umfassten Pigmentplättchen und in Figur 1c in einem Diagramm eine Abhängigkeit eines aspekularen Beobachtungswinkels von einer Ausrichtung eines Interferenzpigments relativ zur Oberfläche der Beschichtung;

Figur 2 zeigt ein von einer Kamera aufgenommenes Bild einer Beschichtung, aufgenommen unter einem aspekularen Messwinkel gemessen relativ zu dem dem hier gewählten Beleuchtungswinkel zugeordneten Glanzwinkel;

Figur 3 zeigt simulierte und normalisierte Remissionsspektren einer $TiO_2$-Beschichtung bei Messgeometrien mit verschiedenen Beleuchtungswinkeln und einem relativ zu den jeweiligen Beleuchtungswinkeln (nahezu) festen aspekularen Messwinkel.

Das erfindungsgemäße Verfahren, die erfindungsgemäße Vorrichtung und das erfindungsgemäße Computerprogrammprodukt sind sowohl auf Autoreparaturlacke für Autos bzw. Autokarosserien bzw. Karosserieanbauteile als auch auf andere Arten von Beschichtungen, einschließlich Färbemittel und Industrielackierungen anwendbar. Die im Folgenden beschriebenen Ausführungsformen der Erfindung sollen nicht einschränkend sein.

Ausführungsformen des erfindungsgemäßen Verfahrens, der erfindungsgemäßen Vorrichtung und des erfindungsgemäßen computerlesbaren Mediums können in einer Vielzahl von Gebieten angewendet werden, wie bspw. zum Abgleichen und/oder Koordinieren von Design- und/oder Modeprodukten.

Ausführungsformen des erfindungsgemäßen Verfahrens können zumindest zum Teil mit einem Computersystem ausgeführt werden oder darin implementiert sein, das eine eigenständige Einheit sein kann oder ein oder mehrere externe Terminals oder Geräte umfassen kann, die mit einem zentralen Computer über ein Netzwerk, wie zum Beispiel das Internet oder ein Intranet kommunizieren.

Der in der vorliegenden Offenbarung beschriebene Computer bzw. Prozessor und damit gekoppelte bzw. darin integrierte Komponenten können daher ein Teil eines lokalen Computersystems oder eines entfernten Computers oder eines Online-Systems oder Kombinationen davon sein.

Die im Rahmen der vorliegenden Offenbarung beschriebene Datenbank und das hier beschriebene Computerprogramm können in einem internen Computerspeicher oder in einem nichtflüchtigen computerlesbaren Medium gespeichert bzw. abrufbar hinterlegt sein.

Ausführungsformen des erfindungsgemäßen Verfahrens und/oder der erfindungsgemäßen Vorrichtung verwenden eine Bilderfassungseinheit, die bspw. eine Mehrwinkel-Farbkamera oder eine Mehrwinkel-Multispektralkamera, ggf. in Kombination mit einem Spektrophotometer sein kann, wodurch verbesserte und vereinfachte Ergebnisse für eine Pigmentcharakterisierung und Probeneigenschaften erzeugt werden können.

Für die nachfolgende Figurenbeschreibung gilt folgende Festlegung: Sind in einer Figur einzelne Bezugszeichen nicht eingetragen, so wird diesbezüglich auf die übrigen Figuren und die dazu gehörigen Beschreibungsteile verwiesen.

Unter "spekularer Richtung" ist die an der Oberfläche des ebenen Messobjekts ausgehend von einer Beleuchtungsrichtung gespiegelte nominelle Beobachtungsrichtung zu verstehen. Ein Mehrwinkel-Farbmessgerät oder generell ein Mehrwinkel-Messgerät zur Messung einer spektralen Variation einer Beschichtung in Abhängigkeit von Beleuchtungs- und/oder Beobachtungs-(Mess-)richtung hat mehrere Beleuchtungsrichtungen und mehrere Beobachtungsrichtungen. Unter Messebene ist eine durch die Gerätenormale und alle Beleuchtungsrichtungen und die Beobachtungsrichtungen und die spekulare Richtung verlaufende Ebene zu verstehen. Alle Winkelangaben beziehen sich auf innerhalb der Messebene liegende Richtungen.

Figur 1a zeigt in schematischer Darstellung einen Strahlenweg 102 für einen unter einem Winkel $\theta_{inc}$ in eine Beschichtung 101 eintretenden optischen Strahl, der von einem sich in der Beschichtung vorliegenden, nicht parallel zur Beschichtungsoberfläche ausgerichteten Interferenzpigment 103 in Richtung Messobjektoberfläche zurückreflektiert wird. Das Messobjekt entspricht dabei einem Probenplättchen mit einer auf einer Probenplättchenoberfläche aufgebrachten Beschichtung.

Erfindungsgemäß ist vorgesehen, eine Oberfläche des Probenplättchens, die mit einer Beschichtung 101 bzw. einem Lack mit einer unbekannten Formulierung beschichtet ist, mit Licht, insbesondere weißem Licht unter einem bestimmten Beleuchtungswinkel relativ zur Oberflächennormalen, bspw. unter einem Winkel $\theta_{inc}$ von 45° relativ zur Oberflächennormalen zu beleuchten. Über der Beschichtung 101 mit unbekannter Formulierung kann noch ein bekannter konventioneller Klarlack aufgebracht sein. Sodann wird mit Hilfe eines Sensors bzw. einer Kamera eine spektrale Strahlung, die von der Oberfläche des Messobjekts reflektiert wird, unter einem bestimmten aspekularen Messwinkel $\theta_{as}$, wie bspw. as15°, d.h. 15° relativ zu dem Glanzwinkel $\theta_{spec}$, wobei "as" für "aspekular" steht, räumlich aufgelöst erfasst, insbesondere in Form eines Bildes.

Umfasst die Beschichtung mit unbekannter Formulierung Interferenzpigmente 103, so sind diejenigen Interferenzpigmente 103 in dem erfassten Bild sichtbar, die relativ zu der Messobjektoberfläche so ausgerichtet sind, d.h. deren Interferenzpigmentplättchen, dass sie in Richtung des aspekularen Messwinkels $\theta_{as}$ spekular reflektieren. Mit Kenntnis der Brechungsindizes der Umgebung (typischerweise Luft, $n_{Umgebung}=1$) und der das Interferenzpigment umgebenden Beschichtung (typischerweise $n_{Beschichtung}=1.5$) ist es möglich, paarweisen Kombinationen von Beleuchtungsrichtung $\theta_{inc}$ (Beleuchtungswinkel) und aspekularem Messwinkel $\theta_{as}$ eindeutig eine Orientierung $\alpha$ zuzuordnen, in der ein Interferenzpigmentflake (Plättchen) in der Beschichtung 101 bzw. dem Lack orientiert sein muss, um die Beleuchtung bzw. das einfallende Licht 102 spekular ($\theta_{pig}$) in Beobachtungsrichtung $\theta_{spec} + \theta_{as}$ zu reflektieren. Für den aspekularen Winkel $\theta_{as}$, in den das mit $\alpha$ relativ zur Oberfläche orientierte Interferenzpigment 103 spekular ($\theta_{pig}$) reflektiert, gilt gemäß Figur 1a in Abhängigkeit des Einfallswinkels des Lichts auf die Messobjektoberfläche $\theta_{inc}$ (gemessen zur Normalen):

$$\theta_{as} = \arcsin[n_{Beschichtung}/n_{Umgebung} * \sin(\arcsin(n_{Umgebung}/n_{Beschichtung} * \sin(\theta_{inc})) + \alpha)] - \theta_{inc}$$

$$(1)$$

Figur 1b zeigt zwei mögliche Messgeometrien zur Erfassung eines ersten und eines zweiten Bildes der auf einer Oberfläche eines Messobjekts aufgebrachten Beschichtung 101 mit darin umfassten Pigmentplättchen 103, wobei hier der Einfachheit halber nur ein Pigmentplättchen gezeigt ist. Eine erste Messgeometrie umfasst eine Beleuchtung an einer Position 111, die die Beschichtung 101 unter einem ersten Einfallswinkel $\theta_{inc1}$ beleuchtet und eine Kamera an einer Position 121, die ein erstes Bild unter einem ersten aspekularen Winkel $\theta_{as1}$, gemessen relativ zu dem dem ersten Einfallswinkel $\theta_{inc1}$ zugeordneten Glanzwinkel $\theta_{spec1}$, bzw. in einer ersten Beobachtungsrichtung $\theta_{as1} + \theta_{spec1}$ von der Beschichtung 101 aufnimmt. Eine zweite Messgeometrie umfasst eine Beleuchtung an einer Position 112, die die Beschichtung unter einem zweiten Einfallswinkel $\theta_{inc2}$ mit Licht beleuchtet, und eine Kamera an einer Position 122, die ein zweites Bild in einer zweiten Beobachtungsrichtung $\theta_{as2} + \theta_{spec2}$ aufnimmt, wobei sich mit änderndem Einfallswinkel $\theta_{inc2}$ entsprechend auch der Glanzwinkel $\theta_{spec2}$ ändert, der aspekulare Winkel $\theta_{as2} \approx \theta_{as1}$ aber nahezu gleich bleibt.

Für einen gegenüber einem ersten Einfallswinkel $\theta_{inc1}$ veränderten Einfallswinkel $\theta_{inc2}$ des Lichts ändert sich demnach nach obiger Gleichung (1) für die spekulare Reflexion des mit $\alpha$ relativ zur Oberfläche orientierten Interferenzpigments 103 gegenüber einer dem ersten Einfallswinkel $\theta_{inc1}$ zugeordneten ersten Beobachtungsrichtung $\theta_{as1} + \theta_{spec1}$ auch die Beobachtungsrichtung $\theta_{as2} + \theta_{spec2}$. Es gilt jedoch in erster Näherung (kleine Winkel $\theta$ und $\alpha$), dass $\theta_{as1} \approx \theta_{as2}$ und damit, dass das Interferenzpigment 103 weiterhin in den gleichen aspekularen Messwinkel spekular reflektiert (vgl. Figur 1c). Darüber hinaus haben die Optiken der verwendeten Kameras einen gewissen Akzeptanzwinkel (numerische Apertur), sodass in der Praxis geringe Abweichungen in $\theta_{as}$ toleriert werden können.

Figur 1c zeigt die Abhängigkeit des aspekularen Beobachtungswinkels $\theta_{as}$ für spekulare Reflexion eines in einer Beschichtung befindlichen Interferenzpigments von der Ausrichtung $\alpha$ des Interferenzpigments relativ zur Beschichtungsoberfläche bzw. zur Messobjektoberfläche für verschiedene Beleuchtungswinkel $\theta_{inc}$. Auf einer Abszisse 130 ist die Ausrichtung $\alpha$ des Interferenzpigments in Winkelgrad [°] angegeben. Auf einer Ordinate 140 ist der Glanzwinkel des Interferenzpigments, d.h. der aspekulare Winkel $\theta_{as}$ in Winkelgrad [°] angegeben. Kurve 151 zeigt die Abhängigkeit bei einem Beleuchtungswinkel $\theta_{inc}$ von 5°, Kurve 152 zeigt die Abhängigkeit bei einem Beleuchtungswinkel $\theta_{inc}$ von 15°, Kurve 153 zeigt die Abhängigkeit bei einem Beleuchtungswinkel $\theta_{inc}$ von 25°, Kurve 154 zeigt die Abhängigkeit bei einem Beleuchtungswinkel $\theta_{inc}$ von 35°, Kurve 155 zeigt die Abhängigkeit bei einem Beleuchtungswinkel $\theta_{inc}$ von 45°, Kurve 156 zeigt die Abhängigkeit bei einem Beleuchtungswinkel $\theta_{inc}$ von 55°, Kurve 157 zeigt die Abhängigkeit bei einem Beleuchtungswinkel $\theta_{inc}$ von 65°.

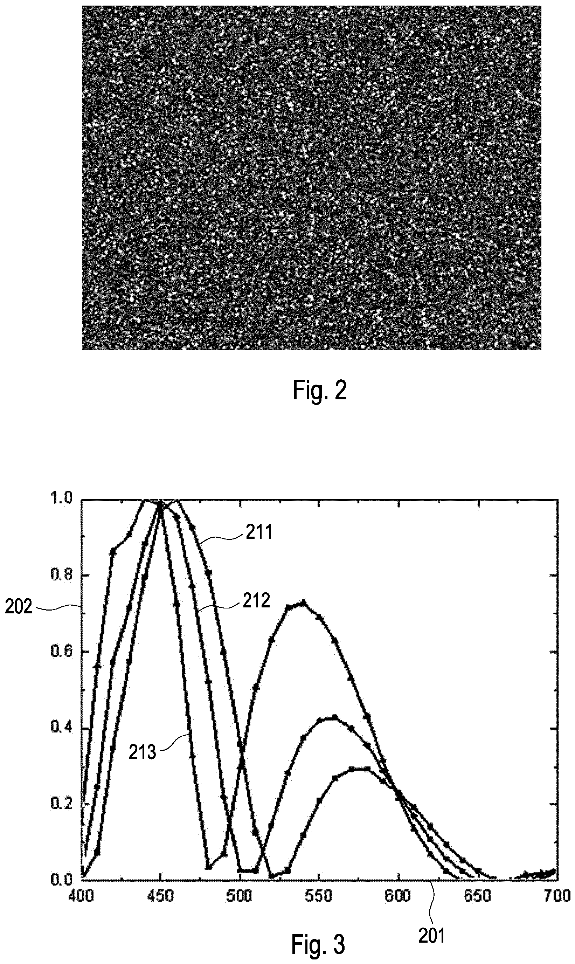

Figur 2 zeigt ein von einer Kamera als Teil einer Ausführungsform der erfindungsgemäßen Vorrichtung aufgenommenes Bild. Dabei wurde eine Oberfläche eines Messobjekts, das ein Probenplättchen umfasst, auf dessen Oberfläche eine Interferenzpigmente umfassende Beschichtung aufgetragen ist, unter einem vorbestimmten Einfallswinkel mit weißem kollimierten Licht beleuchtet. Die Kamera, mit der das Bild aufgenommen wurde, wurde dabei unter einem vorgegebenen aspekularen Winkel relativ zu dem durch den Einfallswinkel gegebenen Glanzwinkel in Bezug zur Normalen der Oberfläche angeordnet. Die hier sichtbaren Glitzerpunkte geben Hinweis auf von der Beschichtung umfasste Interferenzpigmente, die in der Regel in Form von Interferenzpigmentflakes bzw. -plättchen fein verteilt in der Beschichtung vorliegen. In einem nächsten Schritt wird ein anderes weiteres Bild, d. h. ein zweites Bild aufgenommen, wobei dabei die mit der Beschichtung beschichtete Oberfläche des Probenplättchens unter einem anderen zweiten Einfallswinkel beleuchtet wird und die Aufnahme des Bildes aber unter dem gleichen ersten aspekularen Winkel oder dem für optische Brechung an Grenzflächen korrigierten ersten aspekularen Messwinkel relativ zu dem durch den zweiten Einfallswinkel gegebenen Glanzwinkel aufgenommen wird. Da der aspekulare Winkel bei Aufnahme des zweiten Bildes (nahezu) beibehalten wird, zeigen die gleichen Interferenzpigmente innerhalb der Beschichtung in Richtung der Kamera spekulare Reflexion und sind damit in beiden Bildern sichtbar. Anhand des (zumindest nahezu) beibehaltenen aspekularen Winkels relativ zu den sich aus den jeweiligen Einfallswinkeln ergebenden Glanzwinkeln kann die Orientierung der in den jeweiligen Bildern, d. h. in dem ersten und dem mindestens einen zweiten Bild, sichtbaren Interferenzpigmentflakes abgeleitet werden. Nach Analyse der jeweiligen Bilder ist es nunmehr möglich, anhand der aus den Bildern ableitbaren charakteristischen Variation der spektralen Reflexion in Abhängigkeit des Einfallwinkels unter Zuhilfenahme der Datenbank auf den Interferenzpigmenttyp eindeutig zu schließen.

Figur 3 zeigt simulierte und normalisierte Reflexionsspektren eines einzelnen $TiO_2$-beschichteten Micaplättchens, eingebettet in eine Standardmatrix (konstanter Brechungsindex n = 1,5), für Messgeometrien mit verschiedenen Einfallswinkeln. Auf einer Abszisse 201 ist dabei die Wellenlänge des reflektierten Lichts in Nanometer aufgetragen. Auf einer Ordinate 202 ist die normalisierte Reflexion aufgetragen. Das Reflexionsspektrum 211 zeigt das von dem beschichteten Micaplättchen (= Messobjekt) reflektierte Licht bei einem Einfallswinkel von 25° und einem Messwinkel von 15° aspekular relativ zu dem sich aus dem Einfallswinkel ergebenden Glanzwinkel. Dabei ist eine starke Reflexion im Bereich von 460 nm zu erkennen und ein kleineres lokales Maximum im Bereich von 575 nm. Das Reflexionsspektrum 212 zeigt das von dem beschichteten Micaplättchen bzw. dessen Oberfläche reflektierte Licht bei einem Einfallswinkel von 45° und dem beibehaltenen aspekularen Winkel von 15°, gemessen relativ zu dem sich aus dem Einfallswinkel ergebenden Glanzwinkel. Hier liegt das Reflexionsmaximum im Bereich von 450 nm und ein kleineres lokales Maximum im Bereich von 560 nm. Das Reflexionsspektrum 213 wurde für einen Einfallswinkel von 65° aufgenommen, wobei das zur Aufnahme des Reflexionsspektrums vorgesehene Messgerät unter einem aspekularen Winkel von 15° angeordnet war. Hier ergibt sich ein Reflexionsmaximum im Bereich von 440 nm und ein kleineres lokales Maximum im Bereich von 540 nm. Bei Auswertung der sich so ergebenden Reflexionsspektren, insbesondere bei Betrachtung der aus den Reflexionsspektren ableitbaren Variation/Änderung der spektralen Reflexion bzw. des spekularen Reflexionsverlaufs in Abhängigkeit von dem Einfallswinkel, die für einen jeweiligen Interferenzpigmenttyp jeweils charakteristisch ist, lässt sich eindeutig auf ein genau diesen Reflexionsverlauf bzw. genau diese Variation zeigendes Interferenzpigment schließen.

## Patentansprüche

1. Verfahren zum Identifizieren eines Interferenzpigmentes (103) in einer Beschichtung (101), das mindestens die folgenden Schritte aufweist:

   - Beleuchten der auf einer Oberfläche aufgebrachten Beschichtung (101) mit Licht unter einem ersten Beleuchtungswinkel ($\theta_{inc1}$) relativ zu der Normalen der Oberfläche,
   - Aufnehmen eines ersten Bildes von der auf der Oberfläche aufgebrachten Beschichtung (101) mit Licht unter einem ersten aspekularen Messwinkel ($\theta_{as1}$), gemessen relativ zu dem dem ersten Beleuchtungswinkel ($\theta_{inc1}$) zugeordneten Glanzwinkel ($\theta_{spec1}$),
   - Beleuchten der auf der Oberfläche aufgebrachten Beschichtung (101) unter mindestens einem zweiten von dem ersten unterschiedlichen Beleuchtungswinkel ($\theta_{inc2}$) relativ zu der Normalen der Oberfläche,
   - Aufnehmen mindestens eines zweiten Bildes von der auf der Oberfläche aufgebrachten Beschichtung (101) unter dem ersten aspekularen Messwinkel ($\theta_{as1}$), gemessen relativ zu dem mindestens einen zweiten Beleuchtungswinkel ($\theta_{inc2}$) zugeordneten Glanzwinkel ($\theta_{spec2}$),
   - Erkennen eines individuellen Interferenzpigments innerhalb des ersten Bildes und des mindestens einen zweiten Bildes durch eine räumlich aufgelöste Analyse der Bilder, wobei das Interferenzpigment in der Beschichtung relativ zu der Oberfläche so orientiert ist, dass es in Richtung des ersten aspekularen Messwinkels spekular reflektiert, so dass das Interferenzpigment in dem ersten und dem mindestens einen zweiten Bild sichtbar ist,
   - spektrales Analysieren und Auswerten des ersten Bildes und des mindestens einen zweiten Bildes, umfassend ein Ableiten eines jeweiligen Reflexionsspektrums des individuellen Interferenzpigments für das erste und das mindestens eine zweite Bild, wobei bei Variieren des Beleuchtungswinkels eine spektrale Variation der Reflexion des individuellen Interferenzpigments bei dem gleichbleibenden ersten aspekularen Messwinkel ($\theta_{as1}$) ausgewertet wird,
   - Identifizieren des Interferenzpigments (103) auf Basis des räumlichen und spektralen Analysierens und Auswertens des ersten Bildes und des mindestens einen zweiten Bildes, des ersten und des mindestens einen zweiten Beleuchtungswinkels ($\theta_{inc1}$, $\theta_{inc2}$) und des ersten aspekularen Messwinkels ($\theta_{as1}$), unter Abgleich des ersten aspekularen Messwinkels ($\theta_{as1}$) mit jeweiligen in einer Datenbank hinterlegten für jeweilige Interferenzpigmente charakteristischen und den jeweiligen Interferenzpigmenten zugeordneten aspekularen Messwinkeln und unter Abgleich der spektralen Variation der Reflexion des Interferenzpigments bei den unterschiedlichen Beleuchtungswinkeln mit jeweiligen in der Datenbank hinterlegten jeweiligen Interferenzpigmenten zugeordneten Variationen der spekularen Reflexion bei den unterschiedlichen Beleuchtungswinkeln.

2. Verfahren nach Anspruch 1, bei dem das Ableiten des jeweiligen Reflexionsspektrums für das erste und das mindestens eine zweite Bild mittels eines Simulationsalgorithmus durchgeführt wird.

3. Verfahren nach einem der voranstehenden Ansprüche, bei dem zum Aufnehmen des ersten und des mindestens einen zweiten Bildes mindestens eine Kamera, insbesondere eine Mehrwinkelfarbkamera und/oder eine Hyperspektralkamera und/oder ein dazu äquivalentes Kamerasystem, insbesondere ein auch im nicht-sichtbaren Spektralbereich operierendes System verwendet wird.

4. Verfahren nach einem der voranstehenden Ansprüche, bei dem eine Mehrzahl von zweiten Bildern bei einer entsprechenden Mehrzahl von zweiten Beleuchtungswinkeln von der auf der Oberfläche aufgebrachten Beschichtung unter dem ersten aspekularen Messwinkel, gemessen relativ zu dem dem jeweiligen zweiten Beleuchtungswinkel zugeordneten Glanzwinkel aufgenommen wird.

5. Verfahren nach einem der voranstehenden Ansprüche, das zum Identifizieren mehrerer Interferenzpigmente entsprechend mehrmals durchgeführt wird, wobei der aspekulare Messwinkel ebenfalls entsprechend mehrmals variiert wird, wobei zum Identifizieren jeweils eines Interferenzpigments der jeweilige aspekulare Messwinkel konstant gehalten oder lediglich entsprechend der unter dem mindestens einen zweiten Beleuchtungswinkel gegenüber dem ersten Beleuchtungswinkel veränderten optischen Brechung des Lichts korrigiert wird.

6. Computerimplementiertes Verfahren zum Identifizieren eines Interferenzpigmentes (103) in einer Beschichtung (101), das mindestens die folgenden Schritte aufweist:

- Empfangen eines ersten Bildes, wobei das erste Bild von der auf einer Oberfläche aufgebrachten Beschichtung (101) unter Beleuchtung der auf der Oberfläche aufgebrachten Beschichtung (101) mit Licht unter einem ersten Beleuchtungswinkel ($\theta_{inc1}$) relativ zu der Normalen der Oberfläche mit einer Bilderfassungseinheit unter einem ersten aspekularen Messwinkel ($\theta_{as}$), gemessen relativ zu dem dem ersten Beleuchtungswinkel zugeordneten Glanzwinkel ($\theta_{spec1}$) aufgenommen wurde,
- Empfangen mindestens eines zweiten Bildes, wobei das mindestens eine zweite Bild von der auf der Oberfläche aufgebrachten Beschichtung (101) unter Beleuchtung der auf der Oberfläche aufgebrachten Beschichtung (101) mit Licht unter einem zweiten zu dem ersten unterschiedlichen Beleuchtungswinkel ($\theta_{inc2}$) relativ zu der Normalen der Oberfläche mit einer Bilderfassungseinheit unter dem ersten aspekularen Messwinkel, gemessen relativ zu dem dem mindestens einen zweiten Beleuchtungswinkel ($\theta_{inc2}$) zugeordneten Glanzwinkel ($\theta_{spec2}$) aufgenommen wurde,
- Durchführen einer Bildanalyse für das erste und das mindestens eine zweite Bild, unter Verwendung mindestens eines Prozessors,
- Erkennen eines individuellen Interferenzpigments innerhalb des ersten Bildes und des mindestens einen zweiten Bildes durch eine räumlich aufgelöste Analyse der Bilder, wobei das Interferenzpigment in der Beschichtung relativ zu der Oberfläche so orientiert ist, dass es in Richtung des ersten aspekularen Messwinkels spekular reflektiert, so dass das Interferenzpigment in dem ersten und dem mindestens einen zweiten Bild sichtbar ist,
- spektrales Analysieren und Auswerten des ersten Bildes und des mindestens einen zweiten Bildes, umfassend ein Ableiten eines jeweiligen Reflexionsspektrums des individuellen Interferenzpigments für das erste und das mindestens eine zweite Bild, wobei bei Variieren des Beleuchtungswinkels eine spektrale Variation der Reflexion des individuellen Interferenzpigments bei dem gleichbleibenden ersten aspekularen Messwinkel ausgewertet wird,
- Identifizieren des Interferenzpigments (103) auf Basis des räumlichen und spektralen Analysierens und Auswertens des ersten Bildes und des mindestens einen zweiten Bildes, des ersten und des mindestens einen zweiten Beleuchtungswinkels ($\theta_{inc1}$, $\theta_{inc2}$) und des ersten aspekularen Messwinkels ($\theta_{as1}$) unter Abgleich des aspekularen Messwinkels ($\theta_{as1}$) mit jeweiligen in einer Datenbank hinterlegten für jeweilige Interferenzpigmente charakteristischen und den jeweiligen Interferenzpigmenten zugeordneten aspekularen Messwinkeln und unter Abgleich der spektralen Variation der Reflexion des Interferenzpigments bei den unterschiedlichen Beleuchtungswinkeln mit jeweiligen in der Datenbank hinterlegten jeweiligen Interferenzpigmenten zugeordneten Variationen der spekularen Reflexion bei den unterschiedlichen Beleuchtungswinkeln.

7. Vorrichtung, mindestens umfassend:

- eine Datenbank,
- einen Prozessor, der in kommunikativer Verbindung mit der Datenbank steht und dazu konfiguriert ist, mit der Datenbank Daten auszutauschen, wobei der Prozessor programmiert ist, nachfolgende Schritte auszuführen:

- Empfangen eines ersten Bildes, wobei das erste Bild von einer auf einer Oberfläche aufgebrachten Beschichtung (101) unter Beleuchtung der auf der Oberfläche aufgebrachten Beschichtung (101) mit Licht unter einem ersten Beleuchtungswinkel ($\theta_{inc1}$) relativ zu der Normalen der Oberfläche mit einer Bilderfassungseinheit unter einem ersten aspekularen Messwinkel ($\theta_{as}$), gemessen relativ zu dem dem ersten Beleuchtungswinkel ($\theta_{inc1}$) zugeordneten Glanzwinkel ($\theta_{spec1}$) aufgenommen wurde,
- Empfangen mindestens eines zweiten Bildes, wobei das mindestens eine zweite Bild von der auf der Oberfläche aufgebrachten Beschichtung (101) unter Beleuchtung der auf der Oberfläche aufgebrachten Beschichtung (101) mit Licht unter einem zweiten zu dem ersten unterschiedlichen Beleuchtungswinkel ($\theta_{inc2}$) relativ zu der Normalen der Oberfläche mit einer Bilderfassungseinheit unter dem ersten aspekularen Messwinkel, gemessen relativ zu dem dem mindestens einen zweiten Beleuchtungswinkel ($\theta_{inc2}$) zugeordneten Glanzwinkel ($\theta_{spec2}$), oder unter einem korrigierten ersten aspekularen Messwinkel ($\theta_{as2}$), gemessen relativ zu dem dem mindestens einen zweiten Beleuchtungswinkel ($\theta_{inc2}$) zugeordneten Glanzwinkel ($\theta_{spec2}$), aufgenommen wurde, wobei der korrigierte erste aspekulare Messwinkel ($\theta_{as2}$) aus dem ersten aspekularen Messwinkel ($\theta_{as1}$) durch Korrektur entsprechend einer unter dem mindestens einen zweiten Beleuchtungswinkel ($\theta_{inc2}$) gegenüber dem ersten Beleuchtungswinkel ($\theta_{inc1}$) veränderten optischen Brechung des Lichts hervorgeht,
- Durchführen einer Bildanalyse für das erste und das mindestens eine zweite Bild,
- Erkennen eines individuellen Interferenzpigments innerhalb des ersten Bildes und des mindestens einen zweiten Bildes durch eine räumlich aufgelöste Analyse der Bilder, wobei das Interferenzpigment in der Beschichtung relativ zu der Oberfläche so orientiert ist, dass es in Richtung des ersten aspekularen Messwinkels spekular reflektiert, so dass das Interferenzpigment in dem ersten und dem mindestens einen zweiten Bild sichtbar ist,
- spektrales Analysieren und Auswerten des ersten Bildes und des mindestens einen zweiten Bildes, umfassend ein Ableiten eines jeweiligen Reflexionsspektrums des individuellen Interferenzpigments für das erste und das mindestens eine zweite Bild, wobei bei Variieren des Beleuchtungswinkels eine spektrale Variation der Reflexion des individuellen Interferenzpigments bei dem gleichbleibenden ersten aspekularen Messwinkel ausgewertet wird,
- Identifizieren des Interferenzpigments (103) auf Basis des räumlichen und spektralen Analysierens und Auswertens des ersten Bildes und des mindestens einen zweiten Bildes, des ersten und des mindestens einen zweiten Beleuchtungswinkels ($\theta_{inc1}$, $\theta_{inc2}$) und des ersten aspekularen Messwinkels ($\theta_{as1}$) unter Abgleich des ersten aspekularen Messwinkels ($\theta_{as1}$) mit jeweiligen in einer Datenbank hinterlegten für jeweilige Interferenzpigmente charakteristischen und den jeweiligen Interferenzpigmenten zugeordneten aspekularen Messwinkeln und unter Abgleich der spektralen Variation der Reflexion des Interferenzpigments bei den unterschiedlichen Beleuchtungswinkeln mit jeweiligen in der Datenbank hinterlegten jeweiligen Interferenzpigmenten zugeordneten Variationen der spekularen Reflexion bei den unterschiedlichen Beleuchtungswinkeln.

8. Vorrichtung nach Anspruch 7, die zusätzlich die Bilderfassungseinheit umfasst, die in kommunikativer Verbindung mit dem Prozessor steht und dazu konfiguriert ist, das erste und das mindestens eine zweite Bild aufzunehmen.

9. Nichtflüchtiges, computerlesbares Medium, das ein Computerprogramm mit Programmcodemitteln umfasst, die dazu ausgelegt sind, wenn das Computerprogramm auf einer Recheneinheit, insbesondere auf dem Prozessor der Vorrichtung nach Anspruch 7 oder 8 abläuft, folgende Schritte auszuführen:

- Empfangen eines ersten Bildes, wobei das erste Bild von einer auf einer Oberfläche aufgebrachten Beschichtung (101) unter Beleuchtung der auf der Oberfläche aufgebrachten Beschichtung (101) mit Licht unter einem ersten Beleuchtungswinkel ($\theta_{inc1}$) relativ zu der Normalen der Oberfläche mit einer Bilderfassungseinheit unter einem ersten aspekularen Messwinkel ($\theta_{as}$), gemessen relativ zu dem dem ersten Beleuchtungswinkel ($\theta_{inc1}$) zugeordneten Glanzwinkel ($\theta_{spec1}$) aufgenommen wurde,
- Empfangen mindestens eines zweiten Bildes, wobei das mindestens eine zweite Bild von der auf der Oberfläche aufgebrachten Beschichtung (101) unter Beleuchtung der auf der Oberfläche aufgebrachten Beschichtung (101) mit Licht unter einem zweiten zu dem ersten unterschiedlichen Beleuchtungswinkel ($\theta_{inc2}$) relativ zu der Normalen der Oberfläche mit einer Bilderfassungseinheit unter dem ersten aspekularen Messwinkel, gemessen relativ zu dem dem mindestens einen zweiten Beleuchtungswinkel ($\theta_{inc2}$) zugeordneten Glanzwinkel ($\theta_{spec2}$), oder einem korrigierten ersten aspekularen Messwinkel ($\theta_{as2}$), gemessen relativ zu dem dem mindestens einen zweiten Beleuchtungswinkel ($\theta_{inc2}$) zugeordneten Glanzwinkel ($\theta_{spec2}$), wobei der korrigierte erste aspekulare Messwinkel ($\theta_{as2}$) aus dem ersten aspekularen Messwinkel ($\theta_{as1}$) durch Korrektur entsprechend einer unter dem mindestens einen zweiten Beleuchtungswinkel ($\theta_{inc2}$) gegenüber dem ersten Beleuchtungswinkel ($\theta_{inc1}$) veränderten optischen Brechung des Lichts hervorgeht, aufgenommen wurde,

- Durchführen einer Bildanalyse für das erste und das mindestens eine zweite Bild,
- Erkennen eines individuellen Interferenzpigments innerhalb des ersten Bildes und des mindestens einen zweiten Bildes durch eine räumlich aufgelöste Analyse der Bilder, wobei das Interferenzpigment in der Beschichtung relativ zu der Oberfläche so orientiert ist, dass es in Richtung des ersten aspekularen Messwinkels spekular reflektiert, so dass das Interferenzpigment in dem ersten und dem mindestens einen zweiten Bild sichtbar ist,
- spektrales Analysieren und Auswerten des ersten Bildes und des mindestens einen zweiten Bildes, umfassend ein Ableiten eines jeweiligen Reflexionsspektrums des individuellen Interferenzpigments für das erste und das mindestens eine zweite Bild, wobei bei Variieren des Beleuchtungswinkels eine spektrale Variation der Reflexion des individuellen Interferenzpigments bei dem gleichbleibenden ersten aspekularen Messwinkel ausgewertet wird,
- Identifizieren des Interferenzpigments (103) auf Basis des räumlichen und spektralen Analysierens und Auswertens des ersten Bildes und des mindestens einen zweiten Bildes, des ersten und des mindestens einen zweiten Beleuchtungswinkels ($\theta_{inc1}$, $\theta_{inc2}$) und des ersten aspekularen Messwinkels ($\theta_{as1}$) unter Abgleich des ersten aspekularen Messwinkels ($\theta_{as1}$) mit jeweiligen in einer Datenbank hinterlegten für jeweilige Interferenzpigmente charakteristischen und den jeweiligen Interferenzpigmenten zugeordneten aspekularen Messwinkeln und unter Abgleich der spektralen Variation der Reflexion des Interferenzpigments bei den unterschiedlichen Beleuchtungswinkeln mit jeweiligen in der Datenbank hinterlegten jeweiligen Interferenzpigmenten zugeordneten Variationen der spekularen Reflexion bei den unterschiedlichen Beleuchtungswinkeln.

## Claims

1. Process for identifying an interference pigment (103) in a coating (101), including at least the following steps:

- illuminating the coating (101) applied to a surface with light at a first illumination angle ($\theta_{inc1}$) relative to the normal to the surface,
- recording a first image of the coating (101) applied to the surface with light at a first aspecular measuring angle ($\theta_{as1}$), measured in relation to the Bragg angle ($\theta_{spec1}$) assigned to the first illumination angle ($\theta_{inc1}$),
- illuminating the coating (101) applied to the surface at at least one second illumination angle ($\theta_{inc2}$), different from the first, relative to the normal to the surface,
- recording at least one second image of the coating (101) applied to the surface at the first aspecular measurement angle ($\theta_{as1}$), measured in relation to the Bragg angle ($\theta_{spec2}$) assigned to the at least one second illumination angle ($\theta_{inc2}$),
- detecting an individual interference pigment within the first image and the at least one second image by way of a spatially resolved analysis of the images, wherein the interference pigment in the coating is aligned in relation to the surface in such a way that it reflects specularly in the direction of the first aspecular measurement angle, with the result that the interference pigment is visible in the first and the at least one second image,
- spectrally analysing and evaluating the first image and the at least one second image, comprising a derivation of a respective reflection spectrum of the individual interference pigment for the first and the at least one second image, wherein a spectral variation of the reflection of the individual interference pigment is evaluated while varying the illumination angle under the unchanging first aspecular measurement angle ($\theta_{as1}$),
- identifying the interference pigment (103) on the basis of the spatial and spectral analysis and evaluation of the first image and the at least one second image, the first and the at least one second illumination angle ($\theta_{inc1}$, $\theta_{inc2}$) and the first aspecular measurement angle ($\theta_{as1}$), by comparing the first aspecular measurement angle ($\theta_{as1}$) with respective aspecular measurement angles which are stored in a database, characteristic for respective interference pigments and assigned to the respective interference pigments, and by comparing the spectral variation of the reflection of the interference pigment at the different illumination angles with respective variations of the specular reflection at the different illumination angles, said variations being stored in the database and assigned to respective interference pigments.

2. Process according to Claim 1, wherein the derivation of the respective reflection spectrum for the first and the at least one second image is carried out by means of a simulation algorithm.

3. Process according to any of the preceding claims, wherein at least one camera, in particular a multi-angle colour camera and/or a hyperspectral camera and/or a camera system equivalent thereto, in particular a system also operating in the non-visible spectral range, is used for recording the first and the at least one second image.

4. Process according to any of the preceding claims, wherein a plurality of second images at a corresponding plurality of second illumination angles of the coating applied to the surface are recorded at the first aspecular measurement angle, measured in relation to the Bragg angle assigned to the respective second illumination angle.

5. Process according to any of the preceding claims, which for identifying a plurality of interference pigments, is carried out correspondingly a number of times, while the aspecular measurement angle is likewise correspondingly varied a number of times, whereas, for identifying one interference pigment in each case, the respective aspecular measurement angle is kept constant or is just corrected in accordance with the optical refraction of the light that has changed at the at least one second illumination angle as compared with the first illumination angle.

6. Computer-implemented process for identifying an interference pigment (103) in a coating (101), including at least the following steps:

- receiving a first image, wherein the first image of the coating (101) applied to a surface was recorded under illumination of the coating (101) applied to the surface with light at a first illumination angle ($\theta_{inc1}$) relative to the normal to the surface by an image capturing unit at a first aspecular measurement angle ($\theta_{as}$), measured in relation to the Bragg angle ($\theta_{spec1}$) assigned to the first illumination angle,
- receiving at least one second image, wherein the at least one second image of the coating (101) applied to the surface was recorded under illumination of the coating (101) applied to the surface with light at a second illumination angle ($\theta_{inc2}$), different from the first, relative to the normal to the surface by an image capturing unit at the first aspecular measurement angle, measured in relation to the Bragg angle ($\theta_{spec2}$), assigned to the at least one second illumination angle ($\theta_{inc2}$),
- carrying out an image analysis for the first and the at least one second image, by using at least one processor,
- detecting an individual interference pigment within the first image and the at least one second image by way of a spatially resolved analysis of the images, wherein the interference pigment in the coating is aligned in relation to the surface in such a way that it reflects specularly in the direction of the first aspecular measurement angle, with the result that the interference pigment is visible in the first and the at least one second image,
- spectrally analysing and evaluating the first image and the at least one second image, comprising a derivation of a respective reflection spectrum of the individual interference pigment for the first and the at least one second image, wherein a spectral variation of the reflection of the individual interference pigment is evaluated while varying the illumination angle under the unchanging first aspecular measurement angle,
- identifying the interference pigment (103) on the basis of the spatial and spectral analysis and evaluation of the first image and the at least one second image, the first and the at least one second illumination angle ($\theta_{inc1}$, $\theta_{inc2}$) and the first aspecular measurement angle ($\theta_{as1}$), by comparing the aspecular measurement angle ($\theta_{as1}$) with respective aspecular measurement angles which are stored in a database, characteristic for respective interference pigments and assigned to the respective interference pigments, and by comparing the spectral variation of the reflection of the interference pigment at the different illumination angles with respective variations of the specular reflection at the different illumination angles, said variations being stored in the database and assigned to respective interference pigments.

7. Device, at least comprising:

- a database,
- a processor, which is in communicational connection with the database and is configured for exchanging data with the database, wherein the processor is programmed to perform the following steps:

- receiving a first image, wherein the first image of a coating (101) applied to a surface was recorded under illumination of the coating (101) applied to the surface with light at a first illumination angle ($\theta_{inc1}$) relative to the normal to the surface by an image capturing unit at a first aspecular measurement angle ($\theta_{as}$), measured in relation to the Bragg angle ($\theta_{spec1}$) assigned to the first illumination angle ($\theta_{inc1}$),
- receiving at least one second image, wherein the at least one second image of the coating (101) applied to the surface was recorded under illumination of the coating (101) applied to the surface with light at a second illumination angle ($\theta_{inc2}$), different from the first, relative to the normal to the surface by an image capturing unit at the first aspecular measurement angle, measured in relation to the Bragg angle ($\theta_{spec2}$), assigned to the at least one second illumination angle ($\theta_{inc2}$), or at a corrected first aspecular measurement angle ($\theta_{as2}$), measured in relation to the Bragg angle ($\theta_{spec2}$), assigned to the at least one second illumination angle ($\theta_{inc2}$), wherein the corrected first aspecular measurement angle ($\theta_{as2}$) is obtained from the first aspecular measurement angle ($\theta_{as1}$) by correction in accordance with an optical refraction of the light that has changed at the at least one second illumination angle ($\theta_{inc2}$) as compared with the first illumination angle ($\theta_{inc1}$),

- carrying out an image analysis for the first and the at least one second image,
- detecting an individual interference pigment within the first image and the at least one second image by way of a spatially resolved analysis of the images, wherein the interference pigment in the coating is aligned in relation to the surface in such a way that it reflects specularly in the direction of the first aspecular measurement angle, with the result that the interference pigment is visible in the first and the at least one second image,
- spectrally analysing and evaluating the first image and the at least one second image, comprising a derivation of a respective reflection spectrum of the individual interference pigment for the first and the at least one second image, wherein a spectral variation of the reflection of the individual interference pigment is evaluated while varying the illumination angle under the unchanging first aspecular measurement angle,
- identifying the interference pigment (103) on the basis of the spatial and spectral analysis and evaluation of the first image and the at least one second image, the first and the at least one second illumination angle ($\theta_{inc1}$, $\theta_{inc2}$) and the first aspecular measurement angle ($\theta_{as1}$), by comparing the first aspecular measurement angle ($\theta_{as1}$) with respective aspecular measurement angles which are stored in a database, characteristic for respective interference pigments and assigned to the respective interference pigments, and by comparing the spectral variation of the reflection of the interference pigment at the different illumination angles with respective variations of the specular reflection at the different illumination angles, said variations being stored in the database and assigned to respective interference pigments.

**8.** Device according to Claim 7, additionally comprising the image capturing unit, which is in communicational connection with the processor and is configured for recording the first and the at least one second image.

**9.** Nonvolatile, computer-readable medium, which comprises a computer program with program coding means which are designed to perform the following steps when the computer program runs on a computing unit, in particular on the processor of the device according to Claim 7 or 8:

- receiving a first image, wherein the first image of a coating (101) applied to a surface was recorded under illumination of the coating (101) applied to the surface with light at a first illumination angle ($\theta_{inc1}$) relative to the normal to the surface by an image capturing unit at a first aspecular measurement angle ($\theta_{as}$), measured in relation to the Bragg angle ($\theta_{spec1}$) assigned to the first illumination angle ($\theta_{inc1}$),
- receiving at least one second image, wherein the at least one second image of the coating (101) applied to the surface was recorded under illumination of the coating (101) applied to the surface with light at a second illumination angle ($\theta_{inc2}$), different from the first, relative to the normal to the surface by an image capturing unit at the first aspecular measurement angle, measured in relation to the Bragg angle ($\theta_{spec2}$), assigned to the at least one second illumination angle ($\theta_{inc2}$), or at a corrected first aspecular measurement angle ($\theta_{as2}$), measured in relation to the Bragg angle ($\theta_{spec2}$), assigned to the at least one second illumination angle ($\theta_{inc2}$), wherein the corrected first aspecular measurement angle ($\theta_{as2}$) is obtained from the first aspecular measurement angle ($\theta_{as1}$) by correction in accordance with an optical refraction of the light that has changed at the at least one second illumination angle ($\theta_{inc2}$) as compared with the first illumination angle ($\theta_{inc1}$),

- carrying out an image analysis for the first and the at least one second image,
- detecting an individual interference pigment within the first image and the at least one second image by way of a spatially resolved analysis of the images, wherein the interference pigment in the coating is aligned in relation to the surface in such a way that it reflects specularly in the direction of the first aspecular measurement angle, with the result that the interference pigment is visible in the first and the at least one second image,
- spectrally analysing and evaluating the first image and the at least one second image, comprising a derivation of a respective reflection spectrum of the individual interference pigment for the first and the at least one second image, wherein a spectral variation of the reflection of the individual interference pigment is evaluated while varying the illumination angle under the unchanging first aspecular measurement angle,
- identifying the interference pigment (103) on the basis of the spatial and spectral analysis and evaluation of the first image and the at least one second image, the first and the at least one second illumination angle ($\theta_{inc1}$, $\theta_{inc2}$) and the first aspecular measurement angle ($\theta_{as1}$), by comparing the first aspecular measurement angle ($\theta_{as1}$) with respective aspecular measurement angles which are stored in a database, characteristic for respective interference pigments and assigned to the respective interference pigments, and by comparing the spectral variation of the reflection of the interference pigment at the different illumination angles with respective variations of the specular reflection at the different illumination angles, said variations being stored in the database and assigned to respective interference pigments.

## Revendications

1. Procédé pour identifier un pigment d'interférence (103) dans un revêtement (101), comprenant au moins les étapes suivantes :

   - éclairage du revêtement (101) appliqué sur une surface avec de la lumière sous un premier angle d'éclairage ($\theta_{inc1}$) par rapport à la normale à la surface,
   - capture d'une première image du revêtement (101) appliqué sur la surface avec de la lumière sous un premier angle de mesure aspéculaire ($\theta_{as1}$), mesuré par rapport à l'angle de brillance ($\theta_{spec1}$) associé au premier angle d'éclairage ($\theta_{inc1}$),
   - éclairage du revêtement (101) appliqué sur la surface sous au moins un deuxième angle d'éclairage ($\theta_{inc2}$), différent du premier, par rapport à la normale à la surface,
   - capture d'au moins une deuxième image du revêtement (101) appliqué sur la surface sous le premier angle de mesure aspéculaire ($\theta_{as1}$), mesuré par rapport à l'angle de brillance ($\theta_{spec2}$) associé audit au moins un deuxième angle d'éclairage ($\theta_{inc2}$),
   - détection d'un pigment d'interférence individuel à l'intérieur de la première image et de ladite au moins une deuxième image par une analyse spatialement résolue des images, dans lequel le pigment d'interférence dans le revêtement est orienté par rapport à la surface de telle sorte qu'il réfléchit de manière spéculaire dans la direction du premier angle de mesure aspéculaire, de sorte que le pigment d'interférence est visible dans la première et ladite au moins une deuxième image,
   - analyse spectrale et interprétation de la première image et de ladite au moins une deuxième image, cela comprenant la déduction d'un spectre de réflexion respectif du pigment d'interférence individuel pour la première image et ladite au moins une deuxième image, dans lequel, lors d'une variation de l'angle d'éclairage, une variation spectrale de la réflexion du pigment d'interférence individuel est interprétée lorsque le premier angle de mesure aspéculaire ($\theta_{as1}$) reste constant,
   - identification du pigment d'interférence (103) sur la base de l'analyse spatiale et spectrale et de l'interprétation de la première image et de ladite au moins une deuxième image, du premier et dudit au moins un deuxième angle d'éclairage ($\theta_{inc1}$, $\theta_{inc2}$) et du premier angle de mesure aspéculaire ($\theta_{as1}$), en comparant le premier angle de mesure aspéculaire ($\theta_{as1}$) à des angles de mesure aspéculaires respectifs stockés dans une base de données, caractéristiques des pigments d'interférence respectifs et associés aux pigments d'interférence respectifs et en comparant la variation spectrale de la réflexion du pigment d'interférence, pour les différents angles d'éclairage, à des variations respectives de la réflexion spéculaire associées aux pigments d'interférence respectifs et stockées dans la base de données pour les différents angles d'éclairage.

2. Procédé selon la revendication 1, dans lequel la déduction du spectre de réflexion respectif pour la première et ladite au moins une deuxième image est effectuée au moyen d'un algorithme de simulation.

3. Procédé selon l'une des revendications précédentes, dans lequel, pour la capture de la première et de ladite au moins une deuxième image, on utilise au moins une caméra, en particulier une caméra couleur multi-angle et/ou une caméra hyperspectrale et/ou un système de caméra équivalent à celle-ci, en particulier un système fonctionnant également dans le domaine spectral non visible.

4. Procédé selon l'une des revendications précédentes, dans lequel une pluralité de deuxièmes images sont capturées pour une pluralité correspondante de deuxièmes angles d'éclairage du revêtement appliqué sur la surface sous le premier angle de mesure aspéculaire, mesuré par rapport à l'angle de brillance associé au deuxième angle d'éclairage respectif.

5. Procédé selon l'une des revendications précédentes, qui est mis en œuvre plusieurs fois de manière correspondante pour identifier plusieurs pigments d'interférence, dans lequel l'angle de mesure aspéculaire est également amené à varier plusieurs fois de manière correspondante, dans lequel, pour identifier respectivement un pigment d'interférence, l'angle de mesure aspéculaire respectif est maintenu constant ou corrigé uniquement en fonction de la réfraction optique modifiée de la lumière sous ledit au moins un deuxième angle d'éclairage par rapport au premier angle d'éclairage.

**6.** Procédé mis en œuvre par ordinateur pour identifier un pigment d'interférence (103) dans un revêtement (101), comprenant au moins les étapes suivantes :

- réception d'une première image, dans lequel la première image du revêtement (101) appliqué sur une surface a été capturée en éclairant le revêtement (101) appliqué sur la surface avec de la lumière sous un premier angle d'éclairage ($\theta_{inc1}$) par rapport à la normale à la surface à l'aide d'une unité d'acquisition d'image sous un premier angle de mesure aspéculaire ($\theta_{as}$), mesuré par rapport à l'angle de brillance ($\theta_{spec1}$) associé au premier angle d'éclairage,
- réception d'au moins une deuxième image, dans lequel ladite au moins une deuxième image du revêtement (101) appliqué sur la surface a été capturée en éclairant le revêtement (101) appliqué sur la surface avec de la lumière sous un deuxième angle d'éclairage ($\theta_{inc2}$), différent du premier, par rapport à la normale à la surface à l'aide d'une unité d'acquisition d'image sous ledit premier angle de mesure aspéculaire, mesuré par rapport à l'angle de brillance ($\theta_{spec2}$) associé audit au moins un deuxième angle d'éclairage ($\theta_{inc2}$),
- exécution d'une analyse d'image pour la première et ladite au moins une deuxième image, en utilisant au moins un processeur,
- détection d'un pigment d'interférence individuel à l'intérieur de la première image et de ladite au moins une deuxième image par une analyse spatialement résolue des images, dans lequel le pigment d'interférence dans le revêtement est orienté par rapport à la surface de telle sorte qu'il réfléchit de manière spéculaire dans la direction du premier angle de mesure aspéculaire, de sorte que le pigment d'interférence est visible dans la première et ladite au moins une deuxième image,
- analyse spectrale et interprétation de la première image et de ladite au moins une deuxième image, cela comprenant la déduction d'un spectre de réflexion respectif du pigment d'interférence individuel pour la première image et ladite au moins une deuxième image, dans lequel, lors d'une variation de l'angle d'éclairage, une variation spectrale de la réflexion du pigment d'interférence individuel est interprétée lorsque le premier angle de mesure aspéculaire reste constant,
- identification du pigment d'interférence (103) sur la base de l'analyse spatiale et spectrale et de l'interprétation de la première image et de ladite au moins une deuxième image, du premier et dudit au moins un deuxième angle d'éclairage ($\theta_{inc1}$, $\theta_{inc2}$) et du premier angle de mesure aspéculaire ($\theta_{as1}$), en comparant l'angle de mesure aspéculaire ($\theta_{as1}$) à des angles de mesure aspéculaires respectifs stockés dans une base de données, caractéristiques des pigments d'interférence respectifs et associés aux pigments d'interférence respectifs et en comparant la variation spectrale de la réflexion du pigment d'interférence, pour les différents angles d'éclairage, à des variations respectives de la réflexion spéculaire associées aux pigments d'interférence respectifs et stockées dans la base de données pour les différents angles d'éclairage.

**7.** Dispositif comprenant au moins :

- une base de données,
- un processeur qui est en communication avec la base de données et qui est configuré pour échanger des données avec la base de données, dans lequel le processeur est programmé pour exécuter les étapes suivantes :

- réception d'une première image, dans lequel la première image d'un revêtement (101) appliqué sur une surface a été capturée en éclairant le revêtement (101) appliqué sur la surface avec de la lumière sous un premier angle d'éclairage ($\theta_{inc1}$) par rapport à la normale à la surface à l'aide d'une unité d'acquisition d'image sous un premier angle de mesure aspéculaire ($\theta_{as}$), mesuré par rapport à l'angle de brillance ($\theta_{spec1}$) associé au premier angle d'éclairage ($\theta_{inc1}$),
- réception d'au moins une deuxième image, dans lequel ladite au moins une deuxième image du revêtement (101) appliqué sur la surface a été capturée en éclairant le revêtement (101) appliqué sur la surface avec de la lumière sous un deuxième angle d'éclairage ($\theta_{inc2}$), différent du premier, par rapport à la normale à la surface, à l'aide d'une unité d'acquisition d'image sous le premier angle de mesure aspéculaire, mesuré par rapport à l'angle de brillance ($\theta_{spec2}$) associé audit au moins un deuxième angle d'éclairage ($\theta_{inc2}$), ou sous un premier angle de mesure aspéculaire corrigé ($\theta_{as2}$), mesuré par rapport à l'angle de brillance ($\theta_{spec2}$) associé audit au moins un deuxième angle d'éclairage ($\theta_{inc2}$), dans lequel le premier angle de mesure aspéculaire corrigé ($\theta_{as2}$) est obtenu à partir du premier angle de mesure aspéculaire ($\theta_{as1}$) par

une correction correspondant à une réfraction optique modifiée de la lumière sous ledit au moins un deuxième angle d'éclairage ($\theta_{inc2}$) par rapport au premier angle d'éclairage ($\theta_{inc1}$),

- exécution d'une analyse d'image pour la première et ladite au moins une deuxième image,
- détection d'un pigment d'interférence individuel à l'intérieur de la première image et de ladite au moins une deuxième image par une analyse spatialement résolue des images, dans lequel le pigment d'interférence dans le revêtement est orienté par rapport à la surface de telle sorte qu'il réfléchit de manière spéculaire dans la direction du premier angle de mesure aspéculaire, de sorte que le pigment d'interférence est visible dans la première et ladite au moins une deuxième image,
- analyse spectrale et interprétation de la première image et de ladite au moins une deuxième image, cela comprenant la déduction d'un spectre de réflexion respectif du pigment d'interférence individuel pour la première image et ladite au moins une deuxième image, dans lequel, lors d'une variation de l'angle d'éclairage, une variation spectrale de la réflexion du pigment d'interférence individuel est interprétée lorsque le premier angle de mesure aspéculaire reste constant,
- identification du pigment d'interférence (103) sur la base de l'analyse spatiale et spectrale et de l'interprétation de la première image et de ladite au moins une deuxième image, du premier et dudit au moins un deuxième angle d'éclairage ($\theta_{inc1}$, $\theta_{inc2}$) et du premier angle de mesure aspéculaire ($\theta_{as1}$), en comparant le premier angle de mesure aspéculaire ($\theta_{as1}$) à des angles de mesure aspéculaires respectifs stockés dans une base de données, caractéristiques des pigments d'interférence respectifs et associés aux pigments d'interférence respectifs et en comparant la variation spectrale de la réflexion du pigment d'interférence, pour les différents angles d'éclairage, à des variations respectives de la réflexion spéculaire associées aux pigments d'interférence respectifs et stockées dans la base de données pour les différents angles d'éclairage.

8. Dispositif selon la revendication 7, comprenant en outre l'unité d'acquisition d'image qui est en communication avec le processeur et est configurée pour capturer la première et ladite au moins une deuxième image.

9. Support non volatil lisible par ordinateur comprenant un programme d'ordinateur doté de moyens à code de programme conçus pour effectuer, lorsque le programme d'ordinateur est exécuté sur une unité de calcul, en particulier sur le processeur du dispositif selon la revendication 7 ou 8, les étapes suivantes :

- réception d'une première image, dans lequel la première image d'un revêtement (101) appliqué sur une surface a été capturée en éclairant le revêtement (101) appliqué sur la surface avec de la lumière sous un premier angle d'éclairage ($\theta_{inc1}$) par rapport à la normale à la surface à l'aide d'une unité d'acquisition d'image sous un premier angle de mesure aspéculaire ($\theta_{as}$), mesuré par rapport à l'angle de brillance ($\theta_{spec1}$) associé au premier angle d'éclairage ($\theta_{inc1}$),
- réception d'au moins une deuxième image, dans lequel ladite au moins une deuxième image du revêtement (101) appliqué sur la surface a été capturée en éclairant le revêtement (101) appliqué sur la surface avec de la lumière sous un deuxième angle d'éclairage ($\theta_{inc2}$) différent du premier, par rapport à la normale à la surface, à l'aide d'une unité d'acquisition d'image sous le premier angle de mesure aspéculaire, mesuré par rapport à l'angle de brillance ($\theta_{spec2}$) associé audit au moins un deuxième angle d'éclairage ($\theta_{inc2}$), ou sous un premier angle de mesure aspéculaire corrigé ($\theta_{as2}$), mesuré par rapport à l'angle de brillance ($\theta_{spec}$) associé audit au moins un deuxième angle d'éclairage ($\theta_{inc2}$), dans lequel le premier angle de mesure aspéculaire corrigé ($\theta_{as2}$) est obtenu à partir du premier angle de mesure aspéculaire ($\theta_{as1}$) par une correction correspondant à une réfraction optique modifiée de la lumière sous ledit au moins un deuxième angle d'éclairage ($\theta_{inc2}$) par rapport au premier angle d'éclairage ($\theta_{inc1}$),
- exécution d'une analyse d'image pour la première et ladite au moins une deuxième image,
- détection d'un pigment d'interférence individuel à l'intérieur de la première image et de ladite au moins une deuxième image par une analyse spatialement résolue des images, dans lequel le pigment d'interférence dans le revêtement est orienté par rapport à la surface de telle sorte qu'il réfléchit de manière spéculaire dans la direction du premier angle de mesure aspéculaire, de sorte que le pigment d'interférence est visible dans la première et ladite au moins une deuxième image,
- analyse spectrale et interprétation de la première image et de ladite au moins une deuxième image, cela comprenant la déduction d'un spectre de réflexion respectif du pigment d'interférence individuel pour la première image et ladite au moins une deuxième image, dans lequel, lors d'une variation de l'angle d'éclairage, une variation spectrale de la réflexion du pigment d'interférence individuel est interprétée lorsque le premier angle de mesure aspéculaire reste constant,
- identification du pigment d'interférence (103) sur la base de l'analyse spatiale et spectrale et de l'interprétation de la première image et de ladite au moins une deuxième image, du premier et dudit au moins un deuxième

angle d'éclairage ($\theta_{inc1}$, $\theta_{inc2}$) et du premier angle de mesure aspéculaire ($\theta_{as1}$), en comparant le premier angle de mesure aspéculaire ($\theta_{as1}$) à des angles de mesure aspéculaires respectifs stockés dans une base de données, caractéristiques des pigments d'interférence respectifs et associés aux pigments d'interférence respectifs et en comparant la variation spectrale de la réflexion du pigment d'interférence, pour les différents angles d'éclairage, à des variations respectives de la réflexion spéculaire associées aux pigments d'interférence respectifs et stockées dans la base de données pour les différents angles d'éclairage.

Fig. 1 a

Fig. 1 b

EP 3 928 079 B1

Fig. 1 c

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20170200288 A1

- WO 2018217867 A1